# EUROPEAN PATENT SPECIFICATION

(11) **EP 3 439 152 B1**
(45) Date of publication and mention of the grant of the patent: **14.04.2021**
(21) Application number: 17773963.8
(22) Date of filing: 27.02.2017
(51) Int. Cl.: H02K 7/116, B25J 9/08, F16H 1/32, H02K 7/00, H02K 21/14

(54) **ROTARY ACTUATOR AND ROBOT**
DREHSTELLANTRIEB UND ROBOTER
ACTIONNEUR ROTATIF ET ROBOT

(30) Priority: 30.03.2016 JP 2016067468
(43) Date of publication of application: 06.02.2019
(73) Proprietor: Nidec Corporation, Kyoto-shi, Kyoto 601-8205 (JP); Nidec Shimpo Corporation, Nagaokakyo-city, Kyoto 617-0833 (JP)
(72) Inventor: AYUZAWA, Yuu, Suwa-gun Nagano 393-8511 (JP); WAKABAYASHI, Toshiharu, Nagaokakyo-city Kyoto 617-0833 (JP); YONEMURA, Takurou, Nagaokakyo-city Kyoto 617-0833 (JP)
(74) Representative: 2K Patentanwälte Blasberg Kewitz & Reichel
(86) International application number: PCT/JP2017/007348
(87) International publication number: WO 2017/169418

(56) References cited:
- EP-A1- 1 221 755
- EP-A2- 2 532 927
- WO-A1-2005/118204
- JP-A- S63 318 362
- JP-A- 2004 328 898
- JP-A- 2007 288 870
- JP-A- 2014 206 265
- JP-A- 2015 203 477
- US-A1- 2015 209 966

## Description

### [Technical Field]

The present invention relates to a rotary actuator including a motor and a reduction gear which are disposed coaxially with each other. The present invention also relates to a robot having such a rotary actuator.

### [Background Art]

Conventionally, a hollow-type rotary actuator including a hollow motor and a hollow reduction gear is known (for example, refer to Patent Document 1). In the hollow-type rotary actuator described in Patent Document 1, the hollow motor and the hollow reduction gear are coaxially disposed so that the hollow motor and the hollow reduction overlap in an axial direction of the hollow motor. The hollow motor includes a rotor configured with a hollow motor shaft and a drive magnet fixed to an outer circumferential surface of the hollow motor shaft. The hollow motor shaft has a shaft end which extends to an inner circumferential side of the hollow reduction gear.

Further, in the hollow-type rotary actuator described in Patent Document 1, the hollow reduction gear is a hollow wave gear device and includes an annular device housing, a rigid internal gear fixed to an inner circumferential portion of the device housing, a cup-shaped flexible external gear disposed inside the rigid internal gear, and a wave generator disposed inside the flexible external gear. The flexible external gear is rotatably supported by the device housing via a cross roller bearing. A part of the wave generator is fixed to an outer circumferential surface of the shaft end of the hollow motor shaft.

Patent Document 2 discloses an actuator which includes a housing, an output shaft arranged coaxially with the housing, and provided so as to freely rotate with respect to the housing, and a drive mechanism for rotationally driving the output shaft with respect to the housing. The drive mechanism includes a first gear, a second gear, a swing gear, a rotor magnetic circuit, and a stator magnetic circuit. The swing gear is arranged between the first gear and the second gear, and is provided so as to freely rotate about a tilting axis, which is tilted with respect to an axis of the housing. The rotor magnetic circuit is fixed to the swing gear. The stator magnetic circuit is fixed to the housing, and configured to generate an electromagnetic force of attracting or repulsing the rotor magnetic circuit, to thereby swing the swing gear.

### [Citation List]

### [Patent Literature]

[Patent Literature 1] Japanese Unexamined Patent Application Publication No. 2014-206265
[Patent Literature 2] US Patent Application Publication No. 2015/209966

### [Summary of Invention]

### [Technical Problem]

In the hollow-type rotary actuator described in Patent Document 1, in order to form an efficient magnetic circuit in a hollow motor, the hollow motor shaft in which the drive magnet is fixed to the outer circumferential surface thereof is generally formed of a magnetic material such as an iron-based metal or the like. Therefore, a specific gravity of the hollow motor shaft is relatively large. Further, in the hollow-type rotary actuator described in Patent Document 1, the shaft end of the hollow motor shaft extends to the inner circumferential side of the hollow reduction gear, and a length of the hollow motor shaft is long. That is, in the hollow-type rotary actuator described in Patent Document 1, since a hollow motor shaft having a relatively large specific gravity and a long length is used, a weight of the hollow-type rotary actuator is large.

Therefore, an objective of the present invention is to provide a rotary actuator in which a weight thereof can be reduced in the rotary actuator including a motor and a reduction gear disposed coaxially with each other. Further, another objective of the present invention is to provide a robot having such a rotary actuator.

### [Solution to Problem]

To solve the above-described problems, a rotary actuator of the present invention is defined in claim 1.

In the rotary actuator of the present invention, the rotary shaft of the motor has the cylindrical magnet fixing part to which the drive magnet is fixed on the outer circumferential side, and one end side of the input shaft of the reduction gear is fixed to the inner circumferential side of the magnet fixing part. That is, in the present invention, one end side of the input shaft of the reduction gear is fixed to the inner circumferential side of the magnet fixing part which is a portion of the rotary shaft to which the drive magnet is fixed. Further, in the present invention, the input shaft of the reduction gear is formed of a material having a density smaller than that of the magnetic material forming the rotary axis. Therefore, in the present invention, a length of the input shaft of the reduction gear formed of a material having a small density becomes longer, but a length of the rotary shaft formed of a magnetic material having a relatively large density can be shorter, as compared with a case in which one end side of the rotary shaft is fixed to the inner circumferential side of one end side portion of the input shaft of the reduction gear. Therefore, in the present invention, it is possible to reduce a weight of the rotary actuator. Also, in the present invention, since one end side of the input shaft of the reduction gear is fixed to the inner circumferential side of the magnet fixing part, it is possible to reduce a thickness of the magnet fixing part in a radial direction which tends to increase a thickness of the rotary shaft in the radial direction. Therefore, in the present invention, it is possible to further reduce a weight of the rotary actuator.

In the present invention, for example, the rotary shaft may be formed of an iron-based metal, and the input shaft may be formed of an aluminum alloy.

In the present invention, the drive magnet may be formed in a cylindrical shape and fixed to an outer circumferential surface of the magnet fixing part, and an end surface of the drive magnet and one end surface of the input shaft may be disposed at the same position in an axial direction of the rotary shaft. With such a configuration, it is possible to reduce the thickness of the magnet fixing part in the radial direction of the rotary shaft in the entire region of the drive magnet in the axial direction of the rotary shaft.

In the present invention, the rotary shaft and the input shaft are hollow. The rotary actuator of the present invention may be used in a robot including a joint part configured by the rotary actuator, and a wiring disposed to pass through the inner circumferential side of the rotary shaft and the input shaft. In this robot, it is possible to reduce a weight of a joint part.

### [Advantageous Effects of Invention]

As described above, in the present invention, in the rotary actuator including the motor and the reduction gear disposed coaxially with each other, it is possible to reduce a weight of the rotary actuator. Further, in the robot of the present invention, it is possible to reduce a weight of a joint part.

### [Brief Description of Drawings]

FIG. 1 is a front view of an industrial robot according to an embodiment of the present invention.
FIG. 2(A) is a perspective view of the industrial robot shown in FIG. 1, and FIG. 2(B) is a perspective view showing a state in which the industrial robot shown in FIG. 2(A) is operating.
FIG. 3 is a longitudinal cross-sectional view of a joint part shown in FIG. 1.

### [Description of Embodiments]

Hereinafter, an embodiment of the present invention will be described with reference to the drawings.

### (Schematic configuration of industrial robot)

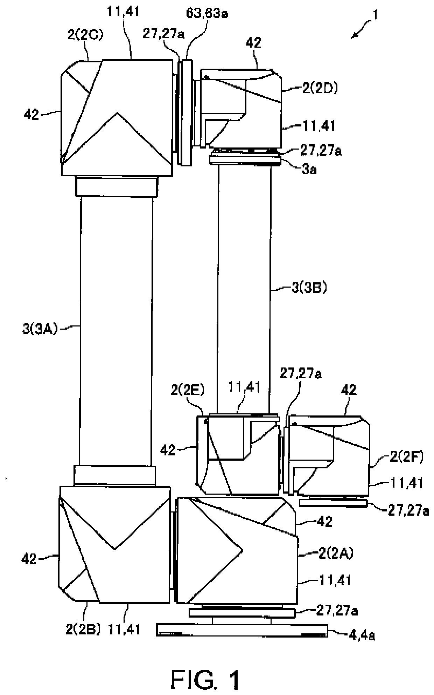

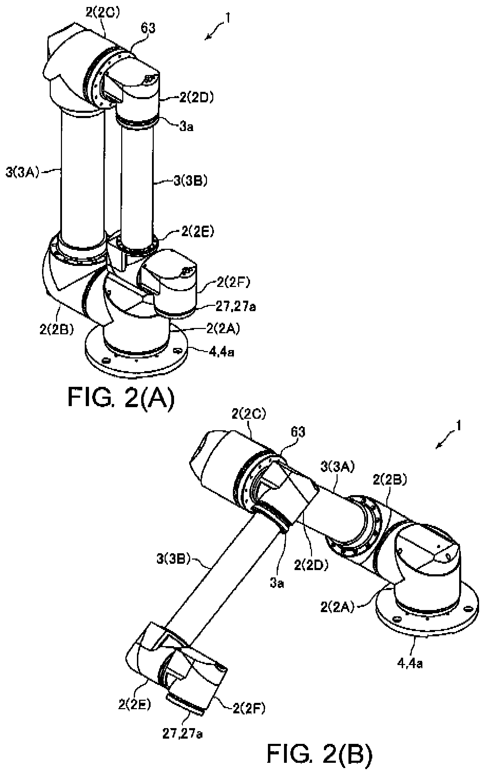

FIG. 1 is a front view of an industrial robot 1 according to an embodiment of the present invention. FIG. 2(A) is a perspective view of the industrial robot 1 shown in FIG. 1, and FIG. 2(B) is a perspective view showing a state in which the industrial robot 1 shown in FIG. 2(A) is operating.

The industrial robot 1 (hereinafter, referred to as "robot 1") of the embodiment is an articulated robot used for assembling or manufacturing predetermined products and is installed and used in an assembly line or a manufacturing line. The robot 1 includes a plurality of joint parts 2 and a plurality of arms 3. In this embodiment, the robot 1 includes six joint parts 2 and two arms 3. Hereinafter, when the six joint parts 2 are distinguished from each other, the respective six joint parts 2 are referred to as a "first joint part 2A," a "second joint part 2B," a "third joint part 2C," a "fourth joint part 2D," a "fifth joint part 2E," and a "sixth joint part 2F." Further, in the following description, when the two arms 3 are distinguished from each other, the respective two arms 3 are referred to as a "first arm 3A" and a "second arm 3B."

Further, the robot 1 includes a support member 4 which is connected to the first joint part 2A to be relatively rotatable. The support member 4 is formed in a flanged cylindrical shape having a flange portion 4a, and a through-hole (not shown) penetrating in the axial direction of the support member 4 is formed on the inner circumferential side of the support member 4. The flange portion 4a is formed in an annular shape and forms a bottom surface portion of the robot 1. The arm 3 is formed in an elongated cylindrical shape.

The first joint part 2A and the second joint part 2B are connected to be relatively rotatable in the robot 1, and the second joint part 2B and a base end of the first arm 3A are fixed together. Further, a tip end of the first arm 3A and the third joint part 2C are fixed, the third joint part 2C and the fourth joint part 2D are connected to be relatively rotatable, the fourth joint part 2D and a base end of the second arm 3B are connected to be relatively rotatable, a tip end of the second arm 3B and the fifth joint part 2E are fixed, and the fifth joint part 2E and the sixth joint part 2F are connected to be relatively rotatable. A hand, a tool, or the like can be installed on the sixth joint part 2F to be relatively rotatable.

Hereinafter, a specific configuration of the joint part 2 will be described. As shown in FIG. 1, in the embodiment, the first joint part 2A, the second joint part 2B, and the third joint part 2C are formed to have the same size, and the fourth joint part 2D, the fifth joint part 2E, and the sixth joint part 2F are formed to have the same size. In addition, the sizes of the first joint part 2A, the second joint part 2B, and the third joint part 2C are larger than the sizes of the fourth joint part 2D, the fifth joint part 2E, and the sixth joint part 2F. However, the first j oint part 2A, the second joint part 2B, the third joint part 2C, the fourth joint part 2D, the fifth joint part 2E, and the sixth joint part 2F are formed to have the same configuration, except for a difference in size.

### (Configuration of joint part)

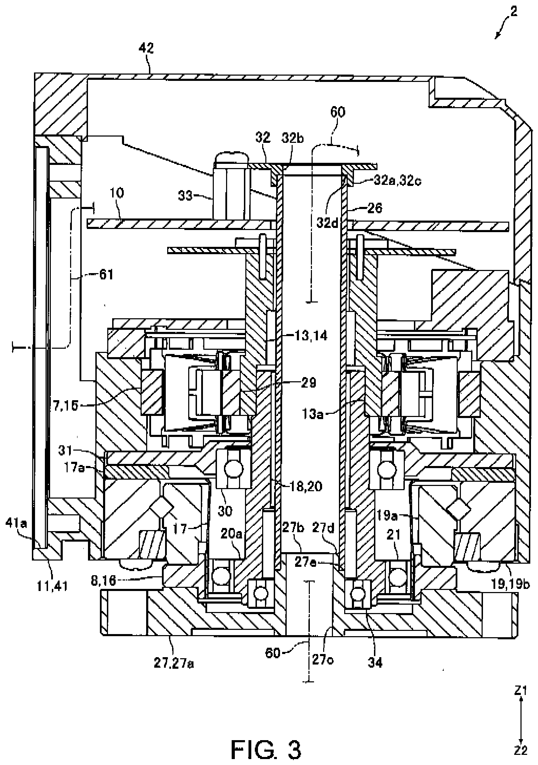

FIG. 3 is a longitudinal cross-sectional view of the joint part 2 shown in FIG. 1. Hereinafter, for the sake of convenience of explanation, a Z1 direction side in FIG. 3 will be referred to as the "upper" side, and a Z2 direction side opposite thereto will be referred to as the "lower" side.

The joint part 2 includes a motor 7, a reduction gear 8 connected to the motor 7, a circuit board 10 to which the motor 7 is electrically connected, and a case body 11 in which the motor 7, the reduction gear 8, and the circuit board 10 are accommodated, and the joint part 2 itself is a rotary actuator. That is, the joint part 2 is configured by a rotary actuator.

The motor 7 is a hollow motor in which a through-hole is formed in a center in the radial direction and has a hollow rotary shaft 13. Further, the motor 7 includes a rotor 14 and a stator 15. The reduction gear 8 is a hollow reduction gear in which a through-hole is formed in a center in the radial direction. The motor 7 and the reduction gear 8 are disposed to overlap in the vertical direction. Specifically, the motor 7 is disposed on the upper side, and the reduction gear 8 is disposed on the lower side. Further, the motor 7 and the reduction gear 8 are disposed coaxially.

The reduction gear 8 of the embodiment is a hollow wave gear device and includes a rigid internal gear 16, a flexible external gear 17, a wave generating portion 18, and a cross roller bearing 19. The wave generating portion 18 includes a hollow input shaft 20 connected to the rotary shaft 13, and a wave bearing 21 installed to the outer circumference side of the input shaft 20. In the embodiment, the rigid internal gear 16 serves as an output shaft of the reduction gear 8. Further, the joint part 2 includes a tubular (more specifically, cylindrical) member 26 disposed on the inner circumferential side of the rotary shaft 13 and the input shaft 20, and an output side member 27 fixed to the rigid internal gear 16.

As described above, the motor 7 includes the rotor 14 and the stator 15. The rotor 14 includes the rotary shaft 13, and a drive magnet 29 fixed to the rotary shaft 13. The rotary shaft 13 is formed in a substantially cylindrical shape elongated in the vertical direction and disposed so that the axial direction of the rotary shaft 13 and the vertical direction coincide with each other. That is, the vertical direction is the axial direction of the rotary shaft 13 and the axial direction of the rotor 14. The rotary shaft 13 serves as a back yoke and is formed of a magnetic material. The rotary shaft 13 of the embodiment is formed of an iron-based metal such as a steel material.

The drive magnet 29 is formed in a cylindrical shape. A length of the drive magnet 29 (a length in the vertical direction) is shorter than that of the rotary shaft 13, and the drive magnet 29 is fixed to an outer circumferential surface of a lower end side portion of the rotary shaft 13. In the embodiment, the drive magnet 29 is fixed to the outer circumferential surface of the rotary shaft 13 so that a lower end surface of the rotary shaft 13 and a lower end surface of the drive magnet 29 coincide with each other.

The stator 15 is formed in a substantially cylindrical shape as a whole and is disposed on the outer circumferential side of the drive magnet 29 to cover an outer circumferential surface of the drive magnet 29. An upper end side portion of the rotary shaft 13 protrudes upward from an upper end surface of the stator 15. The stator 15 includes a driving coil, and a stator core having a plurality of salient poles around which a driving coil is wound via an insulator. The salient poles of the stator core are formed to protrude toward the inner circumferential side, and tip end surfaces of the salient poles face the outer circumferential surface of the drive magnet 29. The stator 15 is fixed to the case body 11.

As described above, the reduction gear 8 includes the rigid internal gear 16, the flexible external gear 17, the wave generating portion 18, and the cross roller bearing 19. The rigid internal gear 16 is formed in a substantially flat cylindrical shape and disposed so that the axial direction of the rigid internal gear 16 and the vertical direction coincide with each other. That is, the vertical direction is the axial direction of the rigid internal gear 16 which is the output shaft of the reduction gear 8. The rigid internal gear 16 is fixed to an inner ring 19a of the cross roller bearing 19. An outer ring 19b of the cross roller bearing 19 is fixed to a lower end side portion of the case body 11, and the rigid internal gear 16 is rotatably held by the lower end side portion of the case body 11 via the cross roller bearing 19.

The flexible external gear 17 is formed in a flanged substantially cylindrical shape having a flange portion 17a at an upper end thereof. The flange portion 17a is formed in a substantially annular shape, and an outer circumferential side portion of the flange portion 17a is fixed to the case body 11. The rigid internal gear 16 forms a lower end side portion of the reduction gear 8. The flange portion 17a forms an upper end side portion of the reduction gear 8. Internal teeth are formed on an inner circumferential surface of the rigid internal gear 16. External teeth meshing with the internal teeth of the rigid internal gear 16 are formed on an outer circumferential surface of the flexible external gear 17 on the lower end side.

As described above, the wave generating portion 18 includes the input shaft 20 and the wave bearing 21. The input shaft 20 is formed in a tubular shape which is elongated as a whole in the vertical direction and is disposed so that the axial direction of the input shaft 20 and the vertical direction coincide with each other. The input shaft 20 is formed of a material having a specific gravity smaller than that of the magnetic material forming the rotary shaft 13. Further, the input shaft 20 is formed of a non-magnetic material. Specifically, the input shaft 20 is formed of an aluminum alloy. A portion of the input shaft 20 other than the lower end side portion is formed in a substantially elongated cylindrical shape. A lower end side portion of the input shaft 20 is an elliptical portion 20a in which a shape of an inner circumferential surface thereof when seen in the axial direction of the input shaft 20 is circular and a shape of an outer circumferential surface thereof when seen in the axial direction of the input shaft 20 is elliptical. The input shaft 20 may be formed of a material other than an aluminum alloy as long as it is formed of a material having a specific gravity smaller than that of the magnetic material forming the rotary shaft 13.

The rotary shaft 13 and the input shaft 20 are disposed coaxially, and the inner circumferential side of the input shaft 20 communicates with the inner circumferential side of the rotary shaft 13. An upper end side portion of the input shaft 20 is fixed to the inner circumferential side of the lower end side portion of the rotary shaft 13. Specifically, the upper end side portion of the input shaft 20 is inserted and fixed into the inner circumferential side of a portion of the rotary shaft 13 to which the drive magnet 29 is fixed. That is, the rotary shaft 13 has a tubular (more specifically, cylindrical) magnet fixing part 13a, to which the drive magnet 29 is fixed on the outer circumferential side, at the lower end side of the rotary shaft 13, and the upper end side of the input shaft 20 is fixed to the inner circumferential side of the magnet fixing part 13a. In addition, the upper end side portion of the input shaft 20 is fixed to the rotary shaft 13 by bonding. In the embodiment, an upper end surface of the drive magnet 29 and an upper end surface of the input shaft 20 are disposed at the same position in the vertical direction.

A center portion of the input shaft 20 in the vertical direction is rotatably supported by a bearing 30. The bearing 30 is a ball bearing. The bearing 30 is installed on a bearing holding member 31, and the bearing holding member 31 is fixed to the case body 11. That is, the input shaft 20 is rotatably supported by the bearing 30 installed on the case body 11 via the bearing holding member 31. The bearing holding member 31 is formed in an annular and flat plate shape and is fixed to the case body 11 to overlap the flange portion 17a of the flexible external gear 17 in the vertical direction.

The wave bearing 21 is a ball bearing having a flexible inner ring and an outer ring. The wave bearing 21 is disposed along an outer circumferential surface of the elliptical portion 20a and is flexed in an elliptical shape. The lower end side portion of the flexible external gear 17 on which the external teeth are formed is disposed on the outer circumferential side of the wave bearing 21 to surround the wave bearing 21, and this portion is flexed in an elliptical shape. The external teeth of the flexible external gear 17 mesh with the internal teeth of the rigid internal gear 16 at two places of the lower end side portion of the flexible external gear 17, which is flexed in an elliptical shape, in the long axis direction.

The output side member 27 is formed in a flanged substantially cylindrical shape having a flange portion 27a and a cylindrical portion 27b. The output side member 27 is disposed so that the axial direction of the output side member 27 and the vertical direction coincide with each other, and a through-hole 27c penetrating in the vertical direction is formed on the inner circumferential side of the output side member 27. The flange portion 27a is formed in a flat plate shape and an annular shape and is connected to a lower end of the cylindrical portion 27b. The flange portion 27a is fixed to the rigid internal gear 16 so that an upper surface of the flange portion 27a is in contact with a lower surface of the rigid internal gear 16. Further, the flange portion 27a is disposed below a lower end of the case body 11 and disposed outside the case body 11.

A small diameter portion 27d having an outer diameter smaller than that of the lower end side portion of the cylindrical portion 27b is formed on the upper end side of the cylindrical portion 27b, and an annular stepped surface 27e orthogonal in the vertical direction is formed on the outer circumferential side of an upper end side portion of the cylindrical portion 27b. The small diameter portion 27d is inserted into the inner circumferential side of a lower end side portion of the tubular member 26, and a lower end surface of the tubular member 26 faces the stepped surface 27e. Further, the through-hole 27c communicates with the inner circumferential side of the tubular member 26. In the embodiment, an inner circumferential surface of the tubular member 26 and an outer circumferential surface of the small diameter portion 27d are in contact with each other. Further, as the inner circumferential surface of the tubular member 26 and the outer circumferential surface of the small diameter portion 27d come into contact with each other, the lower end side of the tubular member 26 is held by the output side member 27. The upper end side portion of the cylindrical portion 27b is disposed on the inner circumferential side of the lower end side portion of the input shaft 20. The bearing 34 is disposed between an outer circumferential surface of the cylindrical portion 27b and an inner circumferential surface of the lower end side portion of the input shaft 20. The bearing 34 is a ball bearing.

The tubular member 26 is formed of an aluminum alloy. Further, the tubular member 26 is formed in a cylindrical shape elongated in the vertical direction and disposed so that the axial direction of the tubular member 26 and the vertical direction coincide with each other. That is, the vertical direction is the axial direction of the tubular member 26. The tubular member 26 may be formed of a metal other than an aluminum alloy or may be formed of a resin.

As described above, the tubular member 26 is inserted into the inner circumferential side of the rotary shaft 13 and the input shaft 20. An upper end surface of the tubular member 26 is disposed above an upper end surface of the rotary shaft 13, and the lower end surface of the tubular member 26 is disposed above a lower end surface of the input shaft 20. Also, as described above, the small diameter portion 27d of the output side member 27 is inserted into the inner circumferential side of the lower end side portion of the tubular member 26, the lower end surface of the tubular member 26 faces the stepped surface 27e, and the lower end side of the tubular member 26 is held by the output side member 27. Specifically, the lower end side of the tubular member 26 is held by the output side member 27 to enable relative rotation of the tubular member 26 with respect to the output side member 27 with the vertical direction as the axial direction of the rotation.

The upper end side of the tubular member 26 is held by the holding member 32. The holding member 32 is fixed to a support column 33, and the support column 33 is fixed to the case body 11. That is, the holding member 32 is fixed to the case body 11 via the support column 33. The holding member 32 has a cylindrical holding portion 32a which holds the upper end side of the tubular member 26. The holding portion 32a is disposed so that the axial direction of the holding portion 32a and the vertical direction coincide with each other, and a through-hole 32b penetrating in the vertical direction is formed on the inner circumferential side of the holding portion 32a. The support column 33 may be fixed to the circuit board 10.

A large diameter portion 32c having an inner diameter larger than that of the upper end side of the holding portion 32a is formed on the lower end side of the holding portion 32a, and an annular stepped surface 32d orthogonal in the vertical direction is formed on the inner circumferential side of a lower end side portion of the holding portion 32a. The upper end side of the tubular member 26 is inserted into the inner circumferential side of the large diameter portion 32c, and the upper end surface of the tubular member 26 faces the stepped surface 32d. In addition, the upper end side of the tubular member 26 is held by the holding portion 32a to enable rotation of the tubular member 26 with the vertical direction as the axial direction of the rotation. The through-hole 32b of the holding portion 32a communicates with the inner circumferential side of the tubular member 26. That is, the through-hole 32b communicating with the inner circumferential side of the tubular member 26 is formed in the holding member 32.

The case body 11 includes a case main body 41 in which upper and lower ends thereof open, and a cover 42 which closes an opening on the upper end side of the case main body 41. The opening on the lower end side of the case main body 41 is closed by the reduction gear 8. An opening portion 41a opening in a direction orthogonal to the vertical direction is formed in a side surface of the case main body 41. That is, the opening portion 41a opening in the direction orthogonal to the vertical direction is formed in the case body 11. The opening portion 41a is formed to pass through the side surface portion of the case main body 41.

The circuit board 10 is a rigid board such as a glass epoxy board and is formed in a flat plate shape. This circuit board 10 is fixed to the case body 11 so that the thickness direction of the circuit board 10 and the vertical direction coincide with each other. Further, the circuit board 10 is fixed to the upper end side of the case body 11. An upper end of the tubular member 26 is disposed above an upper surface of the circuit board 10. A motor driving circuit for driving the motor 7, and so on is mounted on the circuit board 10.

In addition, at least two connectors (not shown) are mounted on the circuit board 10. Wiring 60 connected to one of the two connectors is disposed to pass through the inner circumferential side of the tubular member 26 and then is drawn out from the through-hole 27c of the output side member 27. That is, the wiring 60 is disposed to pass through the inner circumferential side of the rotary shaft 13 and the input shaft 20 and then drawn out from the through-hole 27c of the output side member 27. Further, wiring 61 connected to the other one of the two connectors is drawn out from the opening portion 41a of the case body 11.

### (Connecting structure of joint part 2 and arm 3 of robot 1)

As a connecting structure of the joint part 2 and the arm 3 of the robot 1, for example, each of the joint parts 2 and the arms 3 are connected as described below so that the robot 1 can perform an operation shown in FIG. 2(B).

In the following description, the axial direction of the rigid internal gear 16 of the first joint part 2A is referred to as "the axial direction of the first joint part 2A," the axial direction of the rigid internal gear 16 of the second joint part 2B is referred to as "the axial direction of the second joint part 2B," the axial direction of the rigid internal gear 16 of the third joint part 2C is referred to as "the axial direction of the third joint part 2C," the axial direction of the rigid internal gear 16 of the fourth joint part 2D is referred to as "the axial direction of the fourth joint part 2D," the axial direction of the rigid internal gear 16 of the fifth joint part 2E is referred to as "the axial direction of the fifth joint part 2E," and the axial direction of the rigid internal gear 16 of the sixth joint part 2F is referred to as "the axial direction of the sixth joint part 2F."

First, the support member 4 and the first joint part 2A are connected to each other by fixing an end surface of the support member 4 on the side, at which the flange portion 4a is not formed, to the flange portion 27a of the first joint part 2A. That is, the support member 4 and the first joint part 2A are connected so that the axial direction of the first joint part 2A and the axial direction of the support member 4 coincide with each other. The first j oint part 2A and the second j oint part 2B are connected so that the axial direction of the first joint part 2A and the axial direction of the second joint part 2B are orthogonal to each other. Also, the side surface of the case main body 41 of the first joint part 2A on which the opening portion 41a is formed is fixed to the flange portion 27a of the second joint part 2B.

The second joint part 2B and the first arm 3A are connected so that the axial direction of the second joint part 2B and the longitudinal direction (axial direction) of the first arm 3A are orthogonal to each other. Also, the base end of the first arm 3Ais fixed to the side surface of the case main body 41 of the second joint part 2B in which the opening portion 41a is formed. The first arm 3A and the third joint part 2C are connected so that the longitudinal direction of the first arm 3A and the axial direction of the third joint part 2C are orthogonal to each other. Further, the tip end of the first arm 3A is fixed to the side surface of the case main body 41 of the third joint part 2C in which the opening portion 41a is formed.

The third joint part 2C and the fourth joint part 2D are connected so that the axial direction of the third joint part 2C and the axial direction of the fourth joint part 2D are orthogonal to each other. Also, the side surface of the case main body 41 of the fourth joint part 2D in which the opening portion 41a is formed is fixed to the flange portion 27a of the third joint part 2C. More specifically, the side surface of the case main body 41 of the fourth joint part 2D in which the opening portion 41a is formed is fixed to the flange portion 27a of the third joint part 2C via a connecting member 63 fixed to the side surface of the case main body 41 of the fourth joint part 2D in which the opening portion 41a is formed. The connecting member 63 is formed in a flanged cylindrical shape having a flange portion 63a fixed to the flange portion 27a of the third joint part 2C.

The fourth joint part 2D and the second arm 3B are connected so that the axial direction of the fourth joint part 2D and the longitudinal direction of the second arm 3B coincide with each other. Also, the base end of the second arm 3B is fixed to the flange portion 27a of the fourth joint part 2D. A flange portion 3a for fixing the base end of the second arm 3B to the flange portion 27a of the fourth joint part 2D is formed at the base end of the second arm 3B, and the flange portion 27a of the fourth joint part 2D and the flange portion 3a are fixed to each other.

The second arm 3B and the fifth joint part 2E are connected so that the longitudinal direction of the second arm 3B and the axial direction of the fifth joint part 2E are orthogonal to each other. Also, the tip end of the second arm 3B is fixed to the side surface of the case main body 41 of the fifth joint part 2E in which the opening portion 41a is formed. The fifth joint part 2E and the sixth joint part 2F are connected so that the axial direction of the fifth joint part 2E and the axial direction of the sixth joint part 2F are orthogonal to each other. Further, the side surface of the case main body 41 of the sixth joint part 2F in which the opening portion 41a is formed is fixed to the flange portion 27a of the fifth joint part 2E.

### (Main Effect of this Embodiment)

As described above, in the embodiment, the rotary shaft 13 has the cylindrical magnet fixing part 13a to which the drive magnet 29 is fixed on the outer circumferential side thereof, and the upper end side of the input shaft 20 is inserted and fixed into the inner circumferential side of the magnet fixing part 13a. That is, in the embodiment, the upper end side of the input shaft 20 is inserted and fixed into the inner circumferential side of the portion of the rotating shaft 13 to which the drive magnet 29 is fixed. Further, in the embodiment, the input shaft 20 is formed of an aluminum alloy having a density smaller than that of an iron-based metal forming the rotary shaft 13. Therefore, in the embodiment, a length of the input shaft 20 formed of an aluminum alloy having a small density becomes long, but a length of the rotary shaft 13 formed of an iron-based metal having a relatively large density becomes short, as compared with a case in which the lower end side of the rotary shaft 13 is inserted and fixed into the inner circumferential side of the upper end side portion of the input shaft 20. Therefore, in the embodiment, it is possible to reduce a weight of the joint part 2.

In the embodiment, since the upper end side of the input shaft 20 is inserted and fixed into the inner circumferential side of the magnet fixing part 13a, it is possible to reduce a thickness of the magnet fixing part 13a in the radial direction which tends to increase a thickness of the rotor 14 in the radial direction. In particular, in the embodiment, since the upper end surface of the drive magnet 29 and the upper end surface of the input shaft 20 are disposed at the same position in the vertical direction, it is possible to reduce the thickness of the magnet fixing part 13a in the radial direction of the rotor 14 in the entire region in the vertical direction. Therefore, in the embodiment, it is possible to further reduce the weight of the joint part 2.

### (Another embodiment)

The above-described embodiment is an example of a preferred embodiment of the present invention, but the present invention is not limited thereto, and various modifications can be made within the scope defined by the attached claims.

In the above-described embodiment, the upper end surface of the drive magnet 29 and the upper end surface of the input shaft 20 are disposed at the same position in the vertical direction, but the upper end surface of the input shaft 20 may be disposed above or below the upper end surface of the drive magnet 29. Further, in the above-described embodiment, the drive magnet 29 formed in a cylindrical shape is fixed to the outer circumferential surface of the rotary shaft 13, but a plurality of drive magnets formed in a flat plate shape may be fixed to be buried in the outer circumferential side of the rotary shaft 13.

In the above-described embodiment, the reduction gear 8 is the hollow wave gear device, but the reduction gear 8 may be a hollow reduction gear other than the hollow wave gear device. Further, the reduction gear 8 may be a reduction gear other than the hollow reduction gear. That is, the reduction gear 8 may be a reduction gear including the input shaft 20 formed of a solid shaft having an elongated cylindrical shape. Furthermore, in the above-described embodiment, the motor 7 is the hollow motor, but the motor 7 may be a motor other than the hollow motor. That is, the motor 7 may be a motor having the rotary shaft 13 formed of the solid shaft having the elongated cylindrical shape. When the motor 7 has the rotary shaft 13 formed of the solid shaft and the reduction gear 8 has the input shaft 20 formed of the solid shaft, a concave portion recessed upward is formed in the lower end surface of the rotary shaft 13, and the upper end side of the input shaft 20 is inserted and fixed into this concave portion. In this case, a portion of the rotary shaft 13 in which the concave portion is formed is the magnet fixing part 13a in which the drive magnet 29 is fixed to the outer circumferential surface thereof.

In the above-described embodiment, the rigid internal gear 16 serves as the output shaft of the reduction gear 8, but the flexible external gear 17 may serve as the output shaft of the reduction gear 8. In this case, the rigid internal gear 16 is fixed to the case body 11 and the inner ring 19a of the cross roller bearing 19, and the flexible external gear 17 is fixed to the outer ring 19b of the cross roller bearing 19 and the flange portion 27a of the output side member 27. Also, in the above-described embodiment, an air piping may be disposed to pass through the inner circumferential side of the joint part 2 (that is, the inner circumferential side of the tubular member 26 (the inner circumferential side of the rotary shaft 13 and the input shaft 20)).

In the above-described embodiment, although the robot 1 includes six joint parts 2, the number of the joint parts 2 provided in the robot 1 may be five or less or may be seven or more. Further, in the above-described embodiment, although the robot 1 includes two arms 3, the number of the arms 3 provided in the robot 1 may be one or may be three or more. Furthermore, in the above-described embodiment, although the joint part 2 of the robot 1 is configured by the rotary actuator having the motor 7, the reduction gear 8 and so on, the rotary actuator may be used other than the joint part 2 of the robot 1. For example, the rotary actuator may be used in a driving part of a θ stage (rotary stage) or the like. Also, in the above-described embodiment, the robot 1 is an industrial robot, but the robot 1 can be applied to various uses. For example, the robot 1 may be a service robot.

### [Reference Signs List]

1 Robot (industrial robot)
2 Joint part (rotary actuator)
7 Motor
8 Reduction gear
13 Rotary shaft
13a Magnet fixing part
20 Input shaft
29 Drive magnet
60 Wiring

## Claims

1. A rotary actuator (2) comprises:
a motor (7) having a rotary shaft (13) and a drive magnet (29) fixed to the rotary shaft (13); and
a reduction gear (8) disposed coaxially with the rotary shaft (13) and having an input shaft (20) connected to the rotary shaft (13),
wherein the rotary shaft (13) has a cylindrical magnet fixing part (13a) to which the drive magnet (29) is fixed on an outer circumferential side and is formed of a magnetic material,
one end side of the input shaft (20) is fixed to an inner circumferential side of the magnet fixing part (13a), and
the input shaft (20) is formed of a material having a density smaller than that of the magnetic material forming the rotary shaft (13)
wherein the rotary shaft (13) and the input shaft (20) are hollow, and
**characterized in that** an inner circumferential side of the input shaft (20) communicates with an inner circumferential side of the rotary shaft (13).

2. The rotary actuator (2) according to claim 1, wherein the rotary shaft (13) is formed of an iron-based metal, and
the input shaft (20) is formed of an aluminum alloy.

3. The rotary actuator (2) according to claim 1 or 2, wherein the drive magnet (29) is formed in a cylindrical shape and is fixed to an outer circumferential surface of the magnet fixing part (13a), and
an end surface of the drive magnet (29) and one end surface of the input shaft (20) are disposed at the same position in an axial direction of the rotary shaft (13).

4. A robot (1) **characterized in that** the robot (1) comprises a joint part comprising the rotary actuator (2) according to claim 1, and wiring (60) disposed to pass through the inner circumferential side of the rotary shaft (13) and the input shaft (20).

5. The rotary actuator (2) according to claim 3, wherein an inner circumferential surface of the magnet fixing part (13a) and an outer circumferential surface of the input shaft (20) are surface bonded.

6. The rotary actuator (2) according to claim 3, wherein the magnet fixing part (13a) and the input shaft (20) are overlapped in a range greater than half a width of the drive magnet (29) along an axial direction of the rotary shaft (13).

## Patentansprüche

1. Drehantrieb, umfassend:
einen Motor (7) mit einer Drehwelle (13) und einem Antriebsmagneten (29), der an der Drehwelle (13) befestigt ist; und
ein Untersetzungsgetriebe (8), das koaxial mit der Drehwelle (13) angeordnet ist und eine mit der Drehwelle (13) verbundene Eingangswelle (20) aufweist,
wobei die Drehwelle (13) ein zylindrisches Magnetbefestigungsteil (13a) aufweist, an dem der Antriebsmagnet (29) an einer Außenumfangsseite befestigt ist und das aus einem magnetischen Material gebildet ist,
eine Endseite der Eingangswelle (20) an einer Innenumfangsseite des Magnetbefestigungsteils (13a) befestigt ist, und
die Eingangswelle (20) aus einem Material gebildet ist, das eine geringere Dichte als die des die Drehwelle (13) bildenden magnetischen Materials aufweist, wobei die Drehwelle (13) und die Eingangswelle (20) hohl sind, und
**dadurch gekennzeichnet, dass** eine innere Umfangsseite der Eingangswelle (20) mit einer inneren Umfangsseite der Drehwelle (13) in Verbindung steht.

2. Drehantrieb (2) nach Anspruch 1, wobei die Drehwelle (13) aus einem Metall auf Eisenbasis gebildet ist, und
die Eingangswelle (20) aus einer Aluminiumlegierung gebildet ist.

3. Drehantrieb (2) nach Anspruch 1 oder 2, wobei der Antriebsmagnet (29) in einer zylindrischen Form ausgebildet ist und an einer äußeren Umfangsfläche des Magnetbefestigungsteils (13a) befestigt ist, und
eine Endfläche des Antriebsmagneten (29) und eine Endfläche der Eingangswelle (20) an der gleichen Position in einer axialen Richtung der Drehwelle (13) angeordnet sind.

4. Roboter (1), **dadurch gekennzeichnet, dass** der Roboter (1) ein Verbindungsteil umfasst, das den Drehantrieb (2) nach Anspruch 4 und eine Verdrahtung (60) umfasst, die so angeordnet ist, dass sie durch die innere Umfangsseite der Drehwelle (13) und die Eingangswelle (20) verläuft.

5. Drehantrieb (2) nach Anspruch 3, wobei eine innere Umfangsfläche des Magnetbefestigungsteils (13a) und eine äußere Umfangsfläche der Eingangswelle (20) oberflächenverklebt sind.

6. Drehantrieb (2) nach Anspruch 3, wobei das Magnetbefestigungsteil (13a) und die Eingangswelle (20) in einem Bereich überlappt sind, der größer ist als die halbe Breite des Antriebsmagneten (29) entlang einer axialen Richtung der Drehwelle (13).

## Revendications

1. Un actionneur rotatif comprend :
un moteur (7) ayant un arbre rotatif (13) et un aimant d'entraînement (29) fixé à l'arbre rotatif (13) ; et
un réducteur (8) disposé coaxialement à l'arbre rotatif (13) et ayant un arbre d'entrée (20) relié à l'arbre rotatif (13),
dans lequel l'arbre rotatif (13) comporte une partie de fixation d'aimant cylindrique (13a) à laquelle l'aimant d'entraînement (29) est fixé sur un côté circonférentiel extérieur et est formé d'un matériau magnétique,
une extrémité de l'arbre d'entrée (20) est fixée à un côté circonférentiel intérieur de la partie de fixation de l'aimant (13a), et
l'arbre d'entrée (20) est formé d'un matériau ayant une densité inférieure à celle du matériau magnétique formant l'arbre rotatif (13), dans lequel l'arbre rotatif (13) et l'arbre d'entrée (20) sont creux, et
**caractérisé en ce qu'**un côté circonférentiel intérieur de l'arbre d'entrée (20) communique avec un côté circonférentiel intérieur de l'arbre rotatif (13).

2. L'actionneur rotatif (2) selon la revendication 1, dans lequel l'arbre rotatif (13) est formé d'un métal à base de fer, et
l'arbre d'entrée (20) est formé d'un alliage d'aluminium.

3. L'actionneur rotatif (2) selon la revendication 1 ou 2, dans lequel l'aimant d'entraînement (29) est formé en forme de cylindre et est fixé à une surface circonférentielle extérieure de la partie de fixation de l'aimant (13a), et
une surface d'extrémité de l'aimant d'entraînement (29) et une surface d'extrémité de l'arbre d'entrée (20) sont disposées à la même position dans une direction axiale de l'arbre rotatif (13).

4. Robot (1) **caractérisé en ce que** le robot (1) comprend une partie d'articulation comprenant l'actionneur rotatif (2) selon la revendication 4, et un câblage (60) disposé pour passer à travers le côté circonférentiel intérieur de l'arbre rotatif (13) et de l'arbre d'entrée (20).

5. L'actionneur rotatif (2) selon la revendication 3, dans lequel une surface circonférentielle intérieure de la partie de fixation de l'aimant (13a) et une surface circonférentielle extérieure de l'arbre d'entrée (20) sont liées en surface.

6. L'actionneur rotatif (2) selon la revendication 3, dans lequel la partie de fixation de l'aimant (13a) et l'arbre d'entrée (20) se chevauchent dans une plage supérieure à la moitié de la largeur de l'aimant d'entraînement (29) le long d'une direction axiale de l'arbre rotatif (13).
